# EUROPEAN PATENT APPLICATION

(11) **EP 4 382 630 A1**
(43) Date of publication of application: **12.06.2024**
(21) Application number: 22886448.4
(22) Date of filing: 30.08.2022
(51) Int. Cl.: C23C 2/06, B21D 22/20, C21D 1/18, C21D 9/00, C22C 38/00, C22C 38/60

(54) **HOT-PRESSED MEMBER**

(30) Priority: 29.10.2021 JP 2021178267
(71) Applicant: JFE Steel Corporation, Tokyo 100-0011 (JP)
(72) Inventor: TANAKA Minoru, Tokyo 100-0011 (JP); SATO Rinta, Tokyo 100-0011 (JP); NISHIIKE Ryoto, Tokyo 100-0011 (JP); MIZUNO Daisuke, Tokyo 100-0011 (JP)
(74) Representative: Grünecker Patent- und Rechtsanwälte PartG mbB
(86) International application number: PCT/JP2022/032655
(87) International publication number: WO 2023/074114

(57) **Abstract**

A hot pressed member that has excellent corrosion resistance after coating, in particular when a zirconium chemical conversion treatment is applied, and with reduced microcracks. The hot pressed member includes a steel sheet, a coated or plated layer containing FeAl, Fe₂Al₅, and Zn distributed over at least one side of the steel sheet, and a Zn-containing oxide layer distributed over the coated or plated layer. The solute Zn content in the FeAl is less than 10 mass%.

## Description

### TECHNICAL FIELD

The present disclosure relates to a hot pressed member and, in particular, to a hot pressed member having excellent corrosion resistance after coating and reduced microcracks.

### BACKGROUND

In recent years, as the automobile field promotes weight reduction as well as higher performance of blank sheets, the use of high-strength hot-dip galvanized steel sheets or electrogalvanized steel sheets having rust resistance has been increasing. However, in many cases, as steel sheets become stronger, press formability decreases, making obtaining complex component shapes more difficult. For example, in automobile applications, suspension parts such as the chassis and structural members for the framework such as B-pillars are examples of difficult to form components that require rust resistance.

Against this background, the application of hot press technology, in which forming is performed hot instead of cold, is increasing. Hot press forming is a forming method in which a steel sheet is heated to the temperature range of austenite single phase (around 900 °C), then press formed at high temperature, and simultaneously rapidly cooled (quenched) by contact with the press mold. Press forming is performed in a heated and softened state, followed by quenching to increase strength, and therefore hot press forming is able to achieve both high strength and press formability of steel sheets.

However, hot press forming of galvanized steel sheets has the problem of cracking caused by liquid metal embrittlement (LME) at bent portions. That is, in hot press forming, press forming is performed while heated to a temperature higher than the melting point of a typical Zn coated or plated layer. As a result, the zinc liquefied by heating penetrates into the base steel sheet and causes LME, resulting in cracking at bent portions subjected to tensile stress.

Therefore, from the viewpoint of preventing cracking caused by LME, use of a steel sheet including a Zn-Ni coated or plated layer having a high melting point has been proposed as a steel sheet for hot press forming.

For example, Patent Literature (PTL) 1 describes a method of producing a hot pressed member in which a steel sheet including a Zn-Ni alloy coated or plated layer containing 7 mass% to 15 mass% Ni is heated to 800 °C or more and hot pressed.

Further, PTL 2 describes a method of producing a hot pressed member in which a steel sheet including a Zn-Ni alloy coated or plated layer containing 13 mass% or more Ni is heated to a temperature range from the Ac3 transformation temperature to 1200 °C and hot pressed.

### CITATION LIST

### Patent Literature

PTL 1: JP2013-503254 A (publication in Japan of WO2011/023418 A1)
PTL 2: JP2011-246801 A
PTL 3: JP2014-505791 A (publication in Japan of WO2012/085247 A2)

### SUMMARY

### (Technical Problem)

According to the methods described in PTL 1 and 2, coating or plating of Zn-Ni alloy is used, which has a higher melting point than Zn, and this is thought to suppress cracking caused by LME during hot press forming.

However, although the methods described above suppressed LME cracking (macrocracks) from occurring in the worked portion, detailed observation with an electron microscope sometimes revealed fine cracking (microcracks) of 50 µm or less in a flat portion. Microcracks are thought to be caused by the penetration of zinc vapor generated during hot press forming into the base steel sheet. Here, "flat portion" refers to a portion that is not a worked portion, that is, a flat portion in the member after hot press forming that has not been subjected to bending. Such microcracks do not affect material strength, but may be initiation points for coating defects, which may impair appearance and corrosion resistance.

Therefore, PTL 3 proposes rapid intermediate cooling of a steel sheet to a temperature from 450 °C to 700 °C using an air jet or the like before hot press forming, in order to produce a hot pressed member without microcracks. However, the method proposed in PTL 3 requires the introduction of additional equipment to perform rapid intermediate cooling, which increases production costs.

According to PTL 1 and 2, the hot pressed members obtained by the methods described in PTL 1 and 2 also have excellent corrosion resistance due to a sacrificial protection effect of Zn, included in the coated or plated layer.

However, the corrosion resistance evaluated in PTL 1 is corrosion resistance without coating, not corrosion resistance under actual use conditions of the components. That is, in automobile applications and the like, components that require rust resistance are not usually used without coating. In practice, such components are used with chemical conversion treatment or coating.

On the other hand, the corrosion resistance evaluated in PTL 2 is corrosion resistance after coating where electrodeposition coating is applied after zinc phosphate chemical conversion treatment, and this is considered to be relatively close to actual use conditions.

In recent years, however, from the viewpoint of reducing environmental impact, zirconium chemical conversion treatment has begun to replace conventional zinc phosphate chemical conversion treatment. Accordingly, hot pressed members are required to have excellent corrosion resistance after coating even when electrodeposition coating is applied after zirconium chemical conversion treatment.

And according to examination by the inventors, the hot pressed members obtained by the methods described in PTL 1 and 2 have excellent corrosion resistance after coating when zinc phosphate chemical conversion treatment is applied, but insufficient corrosion resistance after coating when zirconium chemical conversion treatment is applied.

The present disclosure is made in view of the above, and it would be helpful to provide a hot pressed member that has excellent corrosion resistance after coating, in particular when a zirconium chemical conversion treatment is applied, and with reduced microcracks.

### (Solution to Problem)

The present disclosure is made to address the problems described above, and may be summarized as follows.
1. A hot pressed member comprising:
   a steel sheet;
   a coated or plated layer containing FeAl, Fe₂Al₅, and Zn distributed over at least one side of the steel sheet; and
   a Zn-containing oxide layer distributed over the coated or plated layer, wherein
   solute Zn content in the FeAl is less than 10 mass%.
2. The hot pressed member according to 1, above, wherein thickness of the Zn-containing oxide layer is 0.10 µm or more and 5.0 µm or less.
3. The hot pressed member according to 1 or 2, above, wherein an FeAl/Fe₂Al₅ ratio in the coated or plated layer is 5.0 or more and 100 or less.
4. The hot pressed member according to 1 or 2, above, wherein an area ratio of Zn in the coated or plated layer is 0.10 % or more and 5.0 % or less.
5. The hot pressed member according to 3, above, wherein an area ratio of Zn in the coated or plated layer is 0.10 % or more and 5.0 % or less.

### (Advantageous Effect)

The hot pressed member according to the present disclosure has excellent corrosion resistance after coating, in particular when a zirconium chemical conversion treatment is applied, and reduced microcracks. Further, the hot pressed member according to the present disclosure may be produced without a special process such as the rapid intermediate cooling proposed in PTL 3, and is therefore advantageous in terms of production cost.

### DETAILED DESCRIPTION

The following is a detailed description of embodiments of the present disclosure. The following merely describes preferred embodiments of the present disclosure, and the present disclosure is by no means limited to the embodiments described. Further, the unit "%" for solute Zn content, chemical composition of a steel sheet, and composition of a coated or plated layer represents "mass%", unless otherwise specified.

A hot pressed member according to the present disclosure includes a steel sheet as a base metal, a coated or plated layer distributed over the steel sheet, and a Zn-containing oxide layer distributed over the coated or plated layer. Each is described below.

### [Steel sheet]

According to the present disclosure, the technical problems described above are addressed by controlling the composition of the coated or plated layer and the solute Zn content in FeAl, as described below. Accordingly, any steel sheet may be used as the steel sheet, without any particular limitation.

However, from the viewpoint of use as an automobile member or the like, a high strength hot pressed member is preferred. In particular, in order to obtain a hot pressed member that exceeds the 1470 MPa grade, use of a steel sheet including the following chemical composition is preferred.

A chemical composition containing, in mass%,
C: 0.20 % to 0.35 %,
Si: 0.1 % to 0.5 %,
Mn: 1.0 % to 3.0 %,
P: 0.02 % or less,
S: 0.01 % or less,
Al: 0.1 % or less, and
N: 0.01 % or less,
with the balance being Fe and inevitable impurity.

Further, the chemical composition may optionally include at least one selected from the group consisting of:
Nb: 0.05 % or less,
Ti: 0.05 % or less,
B: 0.0050 % or less,
Cr: 0.3 % or less, and
Sb: 0.03 % or less.

The following is a description of the effects of each element in the above preferred chemical composition and the preferred content of each element.

### C: 0.20 % to 0.35 %

C is an element that has an effect of increasing strength by causing formation of microstructures such as martensite. From the viewpoint of obtaining strength exceeding the 1470 MPa grade, C content is preferably 0.20 % or more. However, when the C content exceeds 0.35 %, toughness of spot welded portions deteriorates. Therefore, the C content is preferably 0.35 % or less.

### Si: 0.1 % to 0.5 %

Si is an effective element in strengthening steel to obtain good material properties. To achieve the above effect, Si content is preferably 0.1 % or more. However, when the Si content exceeds 0.5 %, ferrite is stabilized and hardenability is reduced. Therefore, the Si content is preferably 0.5 % or less.

### Mn: 1.0 % to 3.0 %

Mn is an effective element for increasing the strength of steel. From the viewpoint of securing excellent mechanical properties and strength, Mn content is preferably 1.0 % or more. However, excessive Mn content increases surface concentration during annealing and affects adhesion of the coated or plated layer to the steel sheet. Therefore, from the viewpoint of improving the adhesion of the coated or plated layer, the Mn content is preferably 3.0 % or less.

### P: 0.02 % or less

Excessive P content degrades local ductility due to grain boundary embrittlement caused by P segregation to austenite grain boundaries during casting. As a result, balance between strength and ductility of the steel sheet is reduced. Therefore, from the viewpoint of improving the balance between strength and ductility of the steel sheet, the P content is preferably 0.02 % or less. A lower limit of the P content is not particularly limited, and may be 0 %. However, excessive reduction leads to increased production costs, and therefore the P content is preferably 0.001 % or more.

### S: 0.01 % or less

S forms as inclusions such as MnS, which cause degradation of impact resistance and cracking along metal flow in welded portions. Therefore, reducing S content as much as possible is desirable, and specifically 0.01 % or less is preferred. Further, from the viewpoint of securing good stretch flangeability, 0.005 % or less is preferred. A lower limit of the S content is not particularly limited, and may be 0 %. However, excessive reduction leads to increased production costs, and therefore the S content is preferably 0.0001 % or more.

### Al: 0.1 % or less

Al is an element that acts as a deoxidizer. However, when Al content exceeds 0.1 %, hardenability is reduced. Therefore, the Al content is preferably 0.1 % or less. A lower limit of the Al content is not particularly limited. From the viewpoint of increasing the effectiveness as a deoxidizer, the Al content is preferably 0.01 % or more.

### N: 0.01 % or less

When N content exceeds 0.01 %, AlN is formed during heating before hot press forming, and hardenability is reduced. Therefore, the N content is preferably 0.01 % or less. A lower limit of the N content is not particularly limited, and may be 0 %. However, excessive reduction leads to increased production costs, and therefore the N content is preferably 0.001 % or more.

### Nb: 0.05 % or less

Nb is an effective component for strengthening steel. However, excessive addition of Nb reduces shape fixability. Therefore, when Nb is added, Nb content is 0.05 % or less. A lower limit of the Nb content is not particularly limited, and may be 0 %.

### Ti: 0.05 % or less

Ti, like Nb, is also an effective component for strengthening steel. However, excessive addition of Ti reduces shape fixability. Therefore, when Ti is added, Ti content is 0.05 % or less. A lower limit of the Ti content is not particularly limited, and may be 0 %.

### B: 0.0050 % or less

B is an element that has an effect of inhibiting the formation and growth of ferrite from austenite grain boundaries. However, excessive addition of B greatly impairs formability. Therefore, when B is added, from the viewpoint of improving formability, B content is preferably 0.0050 % or less. A lower limit of the B content is not limited. From the viewpoint of increasing the effect of B addition, the B content is preferably 0.0002 % or more.

### Cr: 0.3 % or less

Cr is a useful element for strengthening steel and improving hardenability. However, Cr is an expensive element, and therefore when Cr is added, Cr content is preferably 0.3 % or less to reduce alloy cost. A lower limit of the Cu content is not particularly limited. From the viewpoint of increasing the effect of Cu addition, the Cu content is preferably 0.1 % or more.

### Sb: 0.03 % or less

Sb is an element that has an effect of helping prevent decarburization of the steel sheet surface layer during hot press forming. However, an excess of Sb leads to an increase in rolling load, resulting in lower productivity. Therefore, when Sb is added, from the viewpoint of further improving productivity, Sb content is preferably 0.03 % or less. A lower limit of the Sb content is not particularly limited. From the viewpoint of increasing the effect of Sb addition, the Sb content is preferably 0.003 % or more.

### [Coated or plated layer and Zn-containing oxide layer]

The hot pressed member according to the present disclosure includes a coated or plated layer. The coated or plated layer need only be provided on at least one side of the steel sheet, but may be provided on both sides. The coated or plated layer contains FeAl, Fe₂Al₅, and Zn. FeAl and Fe₂Al₅ are intermetallic compounds formed by the reaction of Fe and Al. Further, Zn is an element that has a sacrificial protection effect. A Zn-containing oxide layer is present at the surface of the coated or plated layer.

The hot pressed member according to the present disclosure that has the above layer structure may typically be produced by hot press forming a Zn-Al alloy coated or plated steel sheet. When a Zn-Al alloy coated or plated steel sheet is hot pressed, components such as Zn in the coated or plated layer diffuse to the base steel sheet, while components such as Fe in the base steel sheet diffuse to the coated or plated layer. At the same time, Zn in the coated or plated layer combines with oxygen present in the heating atmosphere to form a Zn-containing oxide layer at the surface of the coated or plated layer. At this time, Al has a higher affinity with Fe than Zn, and therefore Al in the coated or plated layer preferentially reacts with Fe to form FeAl intermetallic compounds (FeAl, Fe₂Al₅, and the like). Zn is mainly solute in the FeAl intermetallic compound phase, with some remaining as metallic Zn.

The following describes reasons why the hot pressed member according to the present disclosure that has the above layer structure has excellent corrosion resistance after coating. Normally, when a steel sheet that has a Zn alloy coated or plated layer that does not contain Al in the coated or plated layer is subjected to hot press forming, large irregularities that have a height difference exceeding 10 µm are formed on the surface of the Zn alloy coated or plated layer. The inventors consider the reason for this to be as follows. As the temperature of the steel sheet is increased by heating before hot press forming, a surface oxide layer is formed at the surface of the Zn alloy coated or plated layer as the temperature rises. Eventually, when the temperature of the steel sheet exceeds the melting point of the coated or plated layer, the coated or plated layer between the surface oxide layer and the steel sheet melts and becomes liquid. Further, as the temperature of the steel sheet increases, the surface oxide layer also grows further. The surface oxide layer not only grows in the thickness direction, but also attempts to grow in the direction parallel to the surface of the coated or plated layer. As a result, the surface oxide layer grows in such a way as to form surface roughness and increase surface area. This is because the coated or plated layer between the surface oxide layer and the steel sheet is a fluid that can flow, allowing the surface oxide layer to change shape.

A hot pressed member produced in this way has large surface roughness. When zirconium chemical conversion treatment and electrodeposition coating are applied to such a hot pressed member, the electrodeposition coating does not follow the hot pressed member surface roughness, and the thickness of the electrodeposition coating is extremely thin on convex portions. Therefore, when corrosion resistance after coating is evaluated, occurrence of red rust is particularly noticeable in general areas where crosscuts are not applied.

In contrast, when a Zn-Al alloy coated or plated steel sheet is subjected to hot press forming, Fe preferentially reacts with Al to form FeAl intermetallic compounds (FeAl, Fe₂Al₅, and the like). The melting points of the FeAl intermetallic compounds are higher than that of a Zn alloy coated or plated layer, at 1000 °C or more, and therefore the coated or plated layer does not melt due to heating before hot press forming. Therefore, a hot pressed member is obtainable having a flatter surface than in a case where the coated or plated layer does not contain Al.

When a hot pressed member produced in this way is subjected to zirconium chemical conversion treatment and electrodeposition coating and evaluated for corrosion resistance after coating, the thickness of the electrodeposition coating is uniform. Accordingly, localized red rust formation does not occur in general areas where crosscuts are not applied, and excellent corrosion resistance after coating is obtainable.

Further, when the surface of the coated or plated layer forms large irregularities during heating, the surface oxide layer may not be able to follow its own deformation and may separate. Reactivity with the zirconium chemical conversion treatment liquid where the surface oxide layer separates is inferior to that of a portion where the surface oxide layer is present, and therefore coverage of the zirconium chemical conversion coating is reduced and red rust may occur in the portion not covered by the chemical conversion coating.

In contrast, when the surface oxide layer is flat, the zirconium chemical conversion coating is able to uniformly cover the entire surface of the hot pressed member because separation does not occur due to deformation during heating. Accordingly, red rust occurrence caused by separation of the surface oxide layer as described above does not occur.

The coated or plated layer of the hot pressed member may be a coated or plated layer containing FeAl, Fe₂Al₅, and Zn. The total content of FeAl, Fe₂Al₅, and Zn in the entire coated or plated layer is preferably 89 % or more. The total content of FeAl, Fe₂Al₅, and Zn in the entire coated or plated layer is more preferably 90 % or more. An upper limit of the total content of FeAl, Fe₂Al₅, and Zn in the coated or plated layer is not particularly limited, and may be, for example, 100 %, or 99.9 % or less.

Further, the coated or plated layer of the hot pressed member may include a chemical composition consisting of Fe and Al, with the balance being Zn. The chemical composition may optionally further contain Si. The coated or plated layer more preferably includes a chemical composition consisting of Fe: 20 % to 80 %, Al: 10 % to 50 %, Si: 0.1 % to 11 %, with the balance being Zn and inevitable impurity. The Al content is even more preferably 20 % to 50 %.

The chemical composition of the coated or plated layer of the hot pressed member may be determined by dissolving the coated or plated layer in hydrochloric acid aqueous solution and quantifying the elements in the resulting solution using inductively coupled plasma atomic emission spectrometry (ICP-AES). More specifically, measurements may be made by a method described in the EXAMPLES section of the present disclosure.

Solute Zn content in FeAl: less than 10 %

As a result of examination by the inventors, the inventors discovered that microcracks in the hot pressed member are reduced when the solute Zn content in FeAl contained in the coated or plated layer of the hot pressed member is less than 10 %. Therefore, according to the present disclosure, the solute Zn content in FeAl is less than 10 %.

Reasons for the reduction of microcracks when the solute Zn content in FeAl is less than 10 % are considered to be as follows.

First, as mentioned above, microcracks are caused by Zn evaporation during hot press forming. Therefore, from the viewpoint of microcrack reduction, reducing Zn in the coated or plated layer is desirable. However, when the total amount of Zn in the entire coated or plated layer is simply reduced, the sacrificial protection effect of Zn is reduced, and therefore there is a risk that sufficient corrosion resistance will not be achieved.

Here, focusing on the phase structure of the coated or plated layer after hot press forming, FeAl and Fe₂Al₅, which are FeAl intermetallic compound phases, are present in the coated or plated layer. Further, Zn, the cause of microcracks, is mainly solute in the FeAl intermetallic compound phases, and only a portion remains as metallic Zn. Accordingly, reducing the amount of solute Zn in the FeAl intermetallic compound phase is desirable, in order to reduce microcracks while minimizing the effect on corrosion resistance.

On the other hand, examination of the distribution of FeAl and Fe₂Al₅ in the coated or plated layer after hot press forming revealed that Fe₂Al₅ is distributed closer to the base steel sheet and FeAl is distributed more toward the surface side of the coated or plated layer (opposite the base steel sheet) due to the high affinity between Al and Fe. Microcracks are caused by the evaporation of Zn from the surface of the coated or plated layer, and therefore, considering the above distribution, the solute Zn content in the FeAl, among FeAl intermetallic compounds, is considered to mainly affect the occurrence of microcracks. Therefore, by reducing the solute Zn content in FeAl, microcracks may be effectively reduced while minimizing the effect on corrosion resistance.

Further, as described below, according to a preferred embodiment of the present disclosure, the FeAl/Fe₂Al₅ ratio in the coated or plated layer may be 5.0 or more. Reduction of solute Zn content in FeAl combined with an increase in the ratio of FeAl may further enhance the effect of reducing microcracks.

Therefore, according to the present disclosure, the solute Zn content in FeAl is less than 10 %. A lower limit of the solute Zn content in FeAl is not particularly limited, and may be 0 %. However, from the viewpoint of ease of production, the solute Zn content in FeAl is preferably 1.0 % or more. The solute Zn content in FeAl is more preferably 2.0 % or more.

The solute Zn content in FeAl may be measured by an electron probe microanalyzer (EPMA). Specifically, the solute Zn content in FeAl of a hot pressed member at an arbitrary 50 locations is measured by EPMA, and an average value is considered to be the solute Zn content in FeAl.

Although a method for reducing the solute Zn content in FeAl is not particularly limited, the amount of FeAl formed may be increased by promoting the diffusion of Fe from the base steel sheet to the coated or plated layer during hot press forming, resulting in a relative reduction in the solute Zn content in FeAl, as described later.

### Thickness of Zn-containing oxide layer: 0.10 µm to 5.0 µm

The thickness of the Zn-containing oxide layer is not particularly limited and may be any thickness. However, the Zn-containing oxide layer has a function of improving sliding properties between the coated or plated layer surface and the press mold during press forming. Accordingly, when the Zn-containing oxide layer is excessively thin, sliding properties may be reduced and the coated or plated layer may separate during press forming, resulting in reduced corrosion resistance. Therefore, from the viewpoint of further improving corrosion resistance after coating, the thickness of the Zn-containing oxide layer is preferably 0.10 µm or more.

On the other hand, when the Zn-containing oxide layer is excessively thick, microcracks may increase. This is thought to be because a portion of the excessively grown Zn-containing oxide layer separates, and Zn vapor, which causes microcracks, tends to be generated from the separated portion. Further, a location where the Zn-containing oxide layer has separated becomes an initiation point for coating defects, leading to a decrease in corrosion resistance after coating. Therefore, from the viewpoint of further reduction of microcracks and further improvement of corrosion resistance after coating, the thickness of the Zn-containing oxide layer is preferably 5.0 µm or less.

The thickness of the Zn-containing oxide layer may be measured by observing a cross-section of the hot pressed member with a scanning electron microscope (SEM). Specifically, the cross-section of the hot pressed member is observed at 500× magnification using SEM, the thickness of the Zn-containing oxide layer is measured at 20 arbitrary locations, and an average value is considered to be the thickness of the Zn-containing oxide layer.

### FeAl/Fe₂Al₅ ratio: 5.0 to 100

As mentioned above, according to the present disclosure, microcracks are reduced by reducing the solute Zn content in FeAl. However, Zn may form a solute in Fe₂Al₅ as well as FeAl. By increasing the ratio of FeAl to Fe₂Al₅ in the coated or plated layer and reducing the solute Zn content in FeAl to less than 10 %, the solute Zn content in the coated or plated layer as a whole may be further reduced. Therefore, from the viewpoint of further reducing microcracks, the FeAl/Fe₂Al₅ ratio in the coated or plated layer is preferably 5.0 or more. On the other hand, when the FeAl/Fe₂Al₅ ratio exceeds 100, corrosion resistance after coating may deteriorate. This is thought to be because the Zn-containing oxide layer separates at the interface between FeAl and the Zn-containing oxide layer, resulting in a localized decrease in reactivity with the chemical conversion fluid. Therefore, from the viewpoint of further improving corrosion resistance after coating, the FeAl/Fe₂Al₅ ratio in the coated or plated layer is preferably 100 or less.

The FeAl/Fe₂Al₅ ratio may be measured by X-ray diffraction (XRD) measurement. Specifically, a diffraction pattern is obtained by XRD measurement, and the ratio of the intensity of the peak attributed to FeAl to the intensity of the peak attributed to Fe₂Al₅ in the diffraction pattern is the FeAl/Fe₂Al₅ ratio. Here, the interplanar spacing d of the peak attributed to Fe₂Al₅ is 2.19 and the interplanar spacing d of the peak attributed to FeAl is 2.05. Further, the conditions for the XRD measurement are: X-ray source: Cu-Kα, tube voltage: 40 kV, tube current: 30 mA.

### Zn area ratio: 0.10 % to 5.0 %

As mentioned above, Zn is an element that has a sacrificial protection effect, and corrosion resistance improves as the ratio of Zn in the coated or plated layer increases. Therefore, from the viewpoint of further improving corrosion resistance after coating, the area ratio of Zn in the coated or plated layer is preferably 0.10 % or more. Further, when the area ratio of Zn is 0.10 % or more, an effect of suppressing red rust formation at scratches and steel sheet edge surfaces is also improved.

On the other hand, as the ratio of metallic Zn increases, the amount of Zn vapor generated during hot press forming also increases, which leads to microcrack occurrence. Therefore, a small amount of metallic Zn is desirable, to further reduce microcracks. However, when the FeAl phase coexists in the coated or plated layer, generated Zn vapor is trapped in the FeAl phase, and therefore a certain amount of metallic Zn is acceptable. Therefore, from the viewpoint of further reducing microcracks, the area ratio of Zn in the coated or plated layer is preferably 5.0 % or less.

The area ratio of Zn may be measured by an EPMA. Specifically, in measurement by an EPMA, a region in the coated or plated layer where solute Zn content is higher than 70 % is defined as a metallic Zn region, and the ratio of the area of the metallic Zn region to the total area of the coated or plated layer is defined as the area ratio of Zn.

The coating weight of the coated or plated layer on the hot pressed member is not particularly limited. Per side of the steel sheet, the coating weight is preferably 40 g/m² or more. The coating weight is more preferably 50 g/m² or more. The coating weight is even more preferably 60 g/m² or more. Further, the coating weight of the coated or plated layer, per side of the steel sheet, is preferably 400 g/m² or less. The coating weight is more preferably 300 g/m² or less. The coating weight is even more preferably 200 g/m² or less.

The coating weight of the coated or plated layer per side of the hot pressed member may be determined from the difference in weight before and after dissolving and removing the coated or plated layer from the hot pressed member using a hydrochloric acid aqueous solution. More specifically, measurements may be made by a method described in the EXAMPLES section of the present disclosure.

The coating weight of the coated or plated layer on the hot pressed member is normally higher than coating weight of the coated or plated layer on the steel sheet before hot press forming. This is due to interdiffusion between the metal of the coated or plated layer and the metal of the base steel sheet during the hot press forming. In particular, Fe concentration of the coated or plated layer after hot press forming is significantly larger than that of the coated or plated layer before hot press forming. The amount of Fe diffusion varies depending on heating conditions and the like during hot press forming.

### [Production method]

Next, a preferred method of producing the hot pressed member according to the present disclosure is described.

The hot pressed member according to the present disclosure may be produced by coating or plating a base steel sheet to obtain a coated or plated steel sheet, and then hot press forming the coated or plated steel sheet.

Any steel sheet may be used as the base steel sheet without being particularly limited. The chemical composition of a preferred steel sheet is as described earlier. The base steel sheet is preferably a hot-rolled steel sheet or a cold-rolled steel sheet.

Coating or plating the base steel sheet may be achieved by any method, but a hot dip coating method is preferred. The following describes a case of forming a coated steel sheet by a hot dip coating method.

First, prior to hot dip coating, the base steel sheet is annealed. When annealing is performed, the H₂/H₂O partial pressure ratio in the atmosphere is less than 500. Accordingly, decarburization from the surface layer of the base steel sheet occurs, increasing the ferritic microstructure of the surface layer, which promotes diffusion between the coated layer and the base steel sheet in the subsequent hot press forming. When Fe diffusion from the base steel sheet into the coated layer is promoted, the ratio of FeAl to Fe₂Al₅ increases. On the other hand, the Zn content in the coated layer is basically unchanged, and therefore the relative amount of Zn forming a solute in FeAl decreases.

Next, shot blasting is applied to the base steel sheet after the annealing. Shot blasting introduces strain to the surface of the base steel sheet, which in turn promotes diffusion between the coated layer and the base steel sheet in the subsequent hot press forming. As mentioned above, the ratio of FeAl to Fe₂Al₅ increases when Fe diffusion from the base steel sheet into the coated layer is promoted. On the other hand, the Zn content in the coated layer is basically unchanged, and therefore the relative amount of Zn forming a solute in FeAl decreases.

The shot blasting conditions may be adjusted so that the solute Zn content in FeAl in the finally obtained hot pressed member becomes a desired value. For example, a higher air pressure when injecting the blast material increases the effect of promoting diffusion due to shot blasting, resulting in a decrease in solute Zn content in FeAl. Accordingly, the air pressure is preferably 0.10 MPa or more.

Subsequently, hot dip coating is applied to the base steel sheet after the shot blasting to produce a hot-dip coated steel sheet that includes a hot-dip coated layer on a surface of the base steel sheet. The hot-dip coated layer may be a Zn alloy coated layer containing Al. Specifically, the hot-dip coated layer may include a chemical composition consisting of Fe and Al, with the balance being Zn. The chemical composition may optionally further contain Si. The hot-dip coated layer more preferably includes a chemical composition consisting of Al: 20 % to 80%, Si: 0.1 % to 11 %, with the balance being Zn and inevitable impurity. Al content of 30 % to 70 % is even more preferred.

The chemical composition of the hot-dip coated layer of the hot-dip coated steel sheet may be determined by dissolving the hot-dip coated layer in a hydrochloric acid aqueous solution to which hexamethylenetetramine is added as an inhibitor, and quantifying the elements in the resulting dissolved solution using ICP-AES. More specifically, measurements may be made by a method described in the EXAMPLES section of the present disclosure.

The coating weight of the hot-dip coated layer is not particularly limited. Per side of the steel sheet, the coating weight is preferably 20 g/m² or more. The coating weight is more preferably 30 g/m² or more. The coating weight is even more preferably 50 g/m² or more. Further, the coating weight of the hot-dip coated layer, per side of the steel sheet, is preferably 300 g/m² or less. The coating weight is more preferably 250 g/m² or less. The coating weight is even more preferably 200 g/m² or less. As mentioned earlier, hot press forming increases the coating weight of the coated layer due to the diffusion of Fe from the base steel sheet. Therefore, by setting the coating weight of the hot-dip coated layer on the hot-dip coated steel sheet before hot press forming to a range described above, the coating weight of the coated layer on the hot pressed member may be set to a preferred range mentioned above.

The coating weight of the hot-dip coated layer per side of a hot-dip coated steel sheet may be determined from the difference in weight before and after dissolving and removing the hot-dip coated layer using hydrochloric acid aqueous solution with hexamethylenetetramine added as an inhibitor. More specifically, measurements may be made by a method described in the EXAMPLES section of the present disclosure.

Next, the hot-dip coated steel sheet is hot pressed to make a hot pressed member. In the hot press forming, the hot-dip coated steel sheet is first heated to a heating temperature that is the Ac3 transformation temperature or more and 1000 °C or less, held for 1.0 min or more, and then press formed using a press mold. By heating and holding under the conditions described above, a hot pressed member having the layer structure described above is obtainable.

When the heating temperature is lower than the Ac3 transformation temperature, the strength required as a hot pressed member may not be obtained. On the other hand, when the heating temperature exceeds 1000 °C, operating costs increase.

When the hold time is less than 1.0 min, the solute Zn content in FeAl of less than 10 % may not be obtained. An upper limit of the hold time is not particularly limited. The hold time is preferably 10.0 min or less. From the viewpoint of achieving the Zn-containing oxide layer thickness, the FeAl/Fe₂Al₅ ratio, and the area ratio of Zn described above, the hold time is preferably 5.0 min or less.

### EXAMPLES

Functions and effects according to the present disclosure are described below with reference to Examples. However, the present disclosure is not limited to the following Examples.

Hot-dip coated steel sheets were prepared by the following procedure, and the hot-dip coated steel sheets were hot pressed to make hot pressed members.

### • Preparation of hot-dip coated steel sheet

The base steel sheets used were cold-rolled steel sheets having a sheet thickness of 1.4 mm, each including a chemical composition containing, in mass%, C: 0.25 %, Si: 0.25 %, Mn: 1.9 %, P: 0.005 %, S: 0.001 %, Al: 0.03 %, N: 0.004 %, Nb: 0.02 %, Ti: 0.02 %, B: 0.002 %, Cr: 0.2 %, and Sb: 0.008 %, with the balance being Fe and inevitable impurity.

The base steel sheets were annealed, shot blasted, and hot-dip coated in this order under the conditions listed in Tables 1 and 2 to obtain hot-dip coated steel sheets. In the shot blasting, steel balls having an average particle size of 0.5 mm were used as the blast material, and the blast material was injected at an angle of 60° to the steel sheet surface and at the air pressure listed in Tables 1 and 2.

The chemical compositions of the hot-dip coated layers and the coating weights of the hot-dip coated layers on each of the hot-dip coated steel sheets obtained were measured by the following procedure. The measurement results are listed in Tables 1 and 2.

### (Chemical composition of hot-dip coated layer)

First, from each hot-dip coated steel sheet to be evaluated, a 48 mm diameter sample was taken by blanking. One side of the sample (the side opposite the side of chemical composition measurement) was then masked. The surface oxide layer was then dissolved by immersing the sample for 60 min in a 20 g/L ammonium dichromate aqueous solution. Further, the hot-dip coated layer was dissolved by immersing the sample for 60 min in a 17 % hydrochloric acid aqueous solution, with 1 mL of hexamethylenetetramine added as an inhibitor. Metal components (Al, Si, Fe, and Zn) in the hydrochloric acid aqueous solution that dissolved the hot-dip coated layer were quantified by ICP-AES, and the mass of each element in the hot-dip coated layer was determined. The mass of each element obtained was divided by the total mass of the hot-dip coated layer to obtain the content (mass%) of each element in the hot-dip coated layer. The total mass of the hot-dip coated layer was calculated from the coating weight of the hot-dip coated layer (g/m²) and the area of the hot-dip coated layer (m²). In Tables 1 and 2, only the Al, Si, and Fe content is listed, the balance being Zn and inevitable impurity.

### (Coating weight of hot-dip coated layer)

First, from each hot pressed member to be evaluated, three 48 mm diameter samples were taken by blanking. One side of each sample (the side opposite the side of coating weight measurement) was masked. Each sample was then immersed for 60 min in a 20 g/L ammonium dichromate aqueous solution to dissolve the surface oxide layer, and then each sample was weighed. Further, each sample was then immersed for 60 min in a 17 % hydrochloric acid aqueous solution, with 1 mL of hexamethylenetetramine added as an inhibitor, to dissolve the hot-dip coated layer, and then each sample was weighed again. The hot-dip coating weight per unit area was calculated for each sample by dividing the weight difference before and after dissolution of the hot-dip coated layer by the area of the sample. For each hot-dip coated steel sheet, an average value of the coating weight for the three samples was determined as the coating weight of the hot-dip coated layer per side.

### • Preparation of hot pressed member

Next, from each hot-dip coated steel sheet, a 150 mm × 300 mm test piece was taken, and the test piece was heated under the conditions listed in Tables 1 and 2. An electric furnace was used for the heating.

After the defined hold time had elapsed, each test piece was removed from the electric furnace and immediately hot pressed at a forming start temperature of 700 °C using a hat-type press mold to obtain a hot pressed member. The shape of each obtained hot pressed member was 100 mm in flat length on the top surface, 50 mm in flat length on the side surfaces, and 50 mm in flat length on the bottom surface. Further, the bending radius (or bending R) of the press mold was 7 R for both shoulders on the top and bottom surfaces.

The chemical composition of the coated layer and the coating weight for each of the hot pressed members obtained were measured by the following procedure. The measurement results are listed in Tables 3 and 4.

### (Chemical composition of coated layer)

First, from each hot pressed member to be evaluated, a 48 mm diameter sample was taken by blanking. One side of the sample (the side opposite the side of chemical composition measurement) was then masked. The surface oxide layer was then dissolved by immersing the sample for 60 min in a 20 g/L ammonium dichromate aqueous solution. Further, the sample was immersed for 60 min in a 17 % hydrochloric acid aqueous solution to dissolve the coated layer. Metal components (Al, Si, Fe, and Zn) in the hydrochloric acid aqueous solution that dissolved the coated layer were quantified by ICP-AES, and the mass of each element in the coated layer was determined. The mass of each element obtained was divided by the total mass of the coated layer to obtain the content (mass%) of each element in the coated layer. The total mass of the coated layer was calculated from the coating weight of the coated layer (g/m²) and the area of the coated layer (m²). The measurement results are listed in Tables 3 and 4. In Tables 3 and 4, only the Al, Si, and Fe content is listed, the balance being Zn and inevitable impurity.

### (Coating weight of coated layer)

First, from each hot pressed member to be evaluated, three 48 mm diameter samples were taken by blanking. One side of each sample (the side opposite the side of coating weight measurement) was masked. Each sample was then immersed for 60 min in a 20 g/L ammonium dichromate aqueous solution to dissolve the surface oxide layer, and then each sample was weighed. Further, each sample was immersed for 60 min in a 17 % hydrochloric acid aqueous solution to dissolve the coated layer, and then each sample was weighed again. The coating weight per unit area was calculated for each sample by dividing the weight difference before and after dissolution of the coated layer by the area of the sample. For each hot pressed member, an average value of the coating weight for the three samples was determined as the coating weight of the coated layer per side.

Further, for each of the hot pressed members obtained, the solute Zn content in FeAl, the thickness of the Zn-containing oxide layer, the FeAl/Fe₂Al₅ ratio in the coated layer, and the area ratio of Zn in the coated layer were measured by the following methods. The measurement results are listed in Tables 3 and 4.

### (Solute Zn content in FeAl)

A test piece for cross-section observation was taken from the flat top surface of the hot pressed member and analyzed by an EPMA to determine the solute Zn content in FeAl. Specifically, the solute Zn content in FeAl was analyzed at 50 arbitrary locations, and an average value was used as the solute Zn content in FeAl.

### (Thickness of Zn-containing oxide layer)

A test piece for cross-section observation was taken from the flat top surface of the hot pressed member and observed to measure the thickness of the Zn-containing oxide layer. Specifically, the cross-section of the hot pressed member was observed at 500× magnification using SEM, the thickness of the Zn-containing oxide layer was measured at 20 arbitrary locations, and an average value was used as the thickness of the Zn-containing oxide layer.

### (FeAl/Fe₂Al₅ ratio in coated layer)

The FeAl/Fe₂Al₅ ratio in the coated layer was measured using samples cut from the hot pressed member. Specifically, the peak intensities attributed to FeAl (d = 2.05) and Fe₂Al₅ (d = 2.19) were measured from the diffraction pattern obtained by XRD measurement (X-ray source: Cu-Kα, tube voltage: 40 kV, tube current: 30 mA), and the intensity ratio was used as the FeAl/Fe₂Al₅ ratio in the coated layer.

### (Area ratio of Zn in coated layer)

The same test piece for cross-section observation used for the measurement of solute Zn content was analyzed by an EPMA to measure the area ratio of Zn in the coated layer. Specifically, a region in the coated layer where solute Zn content was higher than 70 % was defined as a metallic Zn region, and the ratio of the area of the metallic Zn region to the total area of the coated layer was defined as the area ratio of Zn.

Further, to evaluate the properties of the hot pressed members obtained, corrosion resistance after coating and microcrack amounts were evaluated under the following conditions.

### (Corrosion resistance after coating)

For each obtained hot pressed member, a 70 mm × 150 mm test piece was cut from the flat top surface, and a zirconium chemical conversion treatment and electrodeposition coating were applied to the test piece to obtain a corrosion resistance test piece. The zirconium chemical conversion treatment was performed under standard conditions using a PLM 2100 manufactured by Nihon Parkerizing Co., Ltd. The electrodeposition coating was applied using a GT100V manufactured by Kansai Paint Co., Ltd. to achieve a coating thickness of 10 µm. The baking conditions for the electrodeposition coating were holding at 170 °C for 20 min.

The corrosion resistance test piece obtained was subjected to a corrosion test (SAE-J2334) to evaluate corrosion status after 30 cycles, and the corrosion resistance after coating was judged based on the following criteria. ⊚, ○, and △ were considered acceptable. The evaluation results are listed in Tables 3 and 4.
⊚: No red rust occurred in general areas
○: 1 ≤ red rust occurrence location(s) < 3
△: 3 ≤ red rust occurrence locations < 10
×: 10 ≤ red rust occurrence locations

### (Microcracks)

For each hot pressed member obtained, 10 mm × 10 mm samples were taken from a center of a side surface flat portion (25 mm from the bottom surface) at 10 locations in the transverse direction for cross-section SEM observation. The samples were examined for microcracks by SEM observation (1000× magnification) and evaluated using the following criteria. The evaluation results are listed in Tables 3 and 4. When the average microcrack depth was less than 100 µm (grades 2 to 4), the material was judged to be microcrack resistant for the purpose of the present disclosure.
Grade 4: average microcrack depth less than 10 µm
Grade 3: average microcrack depth 10 µm or more and less than 50 µm
Grade 2: average microcrack depth 50 µm or more and less than 100 µm
Grade 1: average microcrack depth 100 µm or more

As can be seen in Tables 3 and 4, the hot pressed members meeting the conditions of the present disclosure had excellent corrosion resistance after coating, even when zirconium chemical conversion treatment was applied, and reduced microcracking.

### [Table 1]

**Table 1**

| No. | Production conditions | | | | | | | |
|---|---|---|---|---|---|---|---|---|
| | Coated layer | | | | Annealing | Shot blasting | Heating | |
| | Chemical composition (mass%)* | | | Coating weight (g/m²) | H₂/H₂O | Air pressure (MPa) | Heating temp. (°C) | Hold time (min) |
| | Al | Si | Fe | | | | | |
| 1 | 50.0 | 1.5 | 0.8 | 100 | 2000 | 0.10 | 900 | 1.5 |
| 2 | 50.0 | 1.5 | 0.8 | 100 | 500 | 0.10 | 900 | 1.5 |
| 3 | 50.0 | 1.5 | 0.8 | 100 | 400 | 0.10 | 900 | 1.5 |
| 4 | 50.0 | 1.5 | 0.8 | 100 | 200 | 0.10 | 900 | 1.5 |
| 5 | 50.0 | 1.5 | 0.8 | 100 | 50 | 0.10 | 900 | 1.5 |
| 6 | 50.0 | 1.5 | 0.8 | 100 | 200 | 0.00 | 900 | 1.5 |
| 7 | 50.0 | 1.5 | 0.8 | 100 | 200 | 0.08 | 900 | 1.5 |
| 8 | 50.0 | 1.5 | 0.8 | 100 | 200 | 0.12 | 900 | 1.5 |
| 9 | 50.0 | 1.5 | 0.8 | 100 | 200 | 0.15 | 900 | 1.5 |
| 10 | 50.0 | 1.5 | 0.8 | 100 | 200 | 0.20 | 900 | 1.5 |
| 11 | 50.0 | 1.5 | 0.8 | 100 | 200 | 0.10 | 900 | 0.0 |
| 12 | 50.0 | 1.5 | 0.8 | 100 | 200 | 0.10 | 900 | 0.9 |
| 13 | 50.0 | 1.5 | 0.8 | 100 | 200 | 0.10 | 900 | 1.0 |
| 14 | 50.0 | 1.5 | 0.8 | 100 | 200 | 0.10 | 900 | 1.8 |
| 15 | 50.0 | 1.5 | 0.8 | 100 | 200 | 0.10 | 900 | 3.0 |
| 16 | 50.0 | 1.5 | 0.8 | 100 | 200 | 0.10 | 900 | 5.5 |
| 17 | 50.0 | 1.5 | 0.8 | 100 | 200 | 0.10 | 900 | 8.0 |
| 18 | 50.0 | 1.5 | 0.8 | 100 | 200 | 0.10 | 900 | 10.0 |
| 19 | 50.0 | 1.5 | 0.8 | 30 | 200 | 0.10 | 900 | 1.5 |
| 20 | 50.0 | 1.5 | 0.8 | 50 | 200 | 0.10 | 900 | 1.5 |
| 21 | 50.0 | 1.5 | 0.8 | 80 | 200 | 0.10 | 900 | 1.5 |

| | | | | | | | | |
|---|---|---|---|---|---|---|---|---|
| * The balance being Zn and inevitable impurity | | | | | | | | |

### [Table 2]

**Table 2**

| No. | Production conditions | | | | | | | |
|---|---|---|---|---|---|---|---|---|
| | Coated layer | | | | Annealing | Shot blasting | Heating | |
| | Chemical composition (mass%)* | | | Coating weight (g/m²) | H₂/H₂O | Air pressure (MPa) | Heating temp. (°C) | Hold time (min) |
| | Al | Si | Fe | | | | | |
| 22 | 50.0 | 1.5 | 0.8 | 105 | 200 | 0.10 | 900 | 1.5 |
| 23 | 50.0 | 1.5 | 0.8 | 145 | 200 | 0.10 | 900 | 1.5 |
| 24 | 50.0 | 1.5 | 0.8 | 155 | 200 | 0.10 | 900 | 1.5 |
| 25 | 50.0 | 1.5 | 0.8 | 200 | 200 | 0.10 | 900 | 1.5 |
| 26 | 50.0 | 15.00 | 0.8 | 100 | 200 | 0.10 | 900 | 1.5 |
| 27 | 50.0 | 10.00 | 0.8 | 100 | 200 | 0.10 | 900 | 1.5 |
| 28 | 50.0 | 8.00 | 0.8 | 100 | 200 | 0.10 | 900 | 1.5 |
| 29 | 50.0 | 5.00 | 0.8 | 100 | 200 | 0.10 | 900 | 1.5 |
| 30 | 50.0 | 0.12 | 0.8 | 100 | 200 | 0.10 | 900 | 1.5 |
| 31 | 50.0 | 0.05 | 0.8 | 100 | 200 | 0.10 | 900 | 1.5 |
| 32 | 50.0 | - | 0.8 | 100 | 200 | 0.10 | 900 | 1.5 |
| 33 | 20.0 | 1.5 | 0.8 | 100 | 200 | 0.10 | 900 | 1.5 |
| 34 | 30.0 | 1.5 | 0.8 | 100 | 200 | 0.10 | 900 | 1.5 |
| 35 | 40.0 | 1.5 | 0.8 | 100 | 200 | 0.10 | 900 | 1.5 |
| 36 | 55.0 | 1.5 | 0.8 | 100 | 200 | 0.10 | 900 | 1.5 |
| 37 | 60.0 | 1.5 | 0.8 | 100 | 200 | 0.10 | 900 | 1.5 |
| 38 | 70.0 | 1.5 | 0.8 | 100 | 200 | 0.10 | 900 | 1.5 |
| 39 | 80.0 | 1.5 | 0.8 | 100 | 200 | 0.10 | 900 | 1.5 |

| | | | | | | | | |
|---|---|---|---|---|---|---|---|---|
| * The balance being Zn and inevitable impurity | | | | | | | | |

### [Table 3]

**Table 3**

| No. | Hot pressed member | | | | | | | | | | Remarks |
|---|---|---|---|---|---|---|---|---|---|---|---|
| | Coated layer | | | | | | | Zn-containing oxide layer | Evaluation result | | |
| | Chemical composition (mass%)* | | | Coating weight (g/m²) | Solute Zn content in FeAl (mass%) | FeAl/ Fe₂Al₅ | Area ratio of Zn (%) | Thickness (µm) | Corrosion resistance after coating | Microcracks | |
| | Al | Si | Fe | | | | | | | | |
| 1 | 22.6 | 0.7 | 54.8 | 185 | 15.0 | | 3.0 | 1.0 | ⊚ | 1 | Comparative Example |
| 2 | 24.4 | 0.7 | 51.3 | 198 | 11.0 | | 3.0 | 1.0 | ⊚ | 1 | Comparative Example |
| 3 | 22.7 | 0.7 | 54.6 | 186 | 7.0 | 20.0 | 3.0 | 1.0 | ⊚ | 4 | Example |
| 4 | 24.5 | 0.7 | 51.0 | 199 | 5.0 | 20.0 | 3.0 | 1.0 | ⊚ | 4 | Example |
| 5 | 24.4 | 0.7 | 51.2 | 198 | 3.0 | 20.0 | 3.0 | 1.0 | ⊚ | 4 | Example |
| 6 | 23.8 | 0.7 | 52.4 | 194 | 13.5 | | 2.5 | 1.5 | ⊚ | 1 | Comparative Example |
| 7 | 23.8 | 0.7 | 52.5 | 193 | 12.0 | | 2.5 | 1.5 | ⊚ | 1 | Comparative Example |
| 8 | 23.7 | 0.7 | 52.7 | 193 | 8.5 | 35.0 | 2.5 | 1.5 | ⊚ | 4 | Example |
| 9 | 24.5 | 0.7 | 51.1 | 199 | 6.0 | 35.0 | 2.5 | 1.5 | ⊚ | 4 | Example |
| 10 | 24.9 | 0.7 | 50.3 | 202 | 4.5 | 35.0 | 2.5 | 1.5 | ⊚ | 4 | Example |
| 11 | 29.3 | 0.9 | 41.4 | 246 | 12.5 | | 5.0 | 0.5 | ⊚ | 1 | Comparative Example |
| 12 | 28.9 | 0.9 | 42.2 | 242 | 10.5 | | 5.0 | 0.9 | ⊚ | 1 | Comparative Example |
| 13 | 28.2 | 0.8 | 43.7 | 233 | 9.0 | 25.0 | 3.0 | 1.4 | ⊚ | 4 | Example |
| 14 | 23.7 | 0.7 | 52.6 | 193 | 6.8 | 33.0 | 2.4 | 1.7 | ⊚ | 4 | Example |
| 15 | 16.2 | 0.5 | 67.7 | 149 | 6.5 | 75.0 | 1.0 | 3.5 | ○ | 4 | Example |
| 16 | 11.6 | 0.3 | 76.8 | 132 | 2.0 | 105.0 | 0.03 | 5.5 | Δ | 2 | Example |
| 17 | 9.3 | 0.3 | 81.4 | 124 | 1.0 | 130.0 | 0.01 | 6.0 | Δ | 2 | Example |
| 18 | 7.9 | 0.2 | 84.3 | 120 | 0.0 | 150.0 | 0.00 | 6.5 | Δ | 2 | Example |
| 19 | 22.4 | 0.7 | 55.2 | 55 | 5.0 | 20.0 | 0.06 | 0.05 | Δ | 4 | Example |
| 20 | 24.2 | 0.7 | 51.6 | 98 | 5.0 | 20.0 | 0.1 | 0.2 | ○ | 4 | Example |
| 21 | 24.0 | 0.7 | 52.1 | 156 | 5.0 | 20.0 | 1.5 | 1.5 | ⊚ | 4 | Example |

| | | | | | | | | | | | |
|---|---|---|---|---|---|---|---|---|---|---|---|
| * The balance being Zn and inevitable impurity | | | | | | | | | | | |

### [Table 4]

**Table 4**

| No. | Hot pressed member | | | | | | | | | | Remarks |
|---|---|---|---|---|---|---|---|---|---|---|---|
| | Coated layer | | | | | | | Zn-containing oxide layer | Evaluation result | | |
| | Chemical composition (mass%)* | | | Coating weight (g/m²) | Solute Zn content in FeAl (mass%) | FeAl/ Fe₂Al₅ | Area ratio of Zn (%) | Thickness (µm) | Corrosion resistance after coating | Microcracks | |
| | Al | Si | Fe | | | | | | | | |
| 22 | 24.8 | 0.7 | 50.5 | 211 | 5.0 | 20.0 | 2.8 | 3.0 | ⊚ | 4 | Example |
| 23 | 23.7 | 0.7 | 52.7 | 279 | 5.0 | 20.0 | 3.2 | 4.9 | ⊚ | 4 | Example |
| 24 | 23.9 | 0.7 | 52.2 | 302 | 5.0 | 20.0 | 3.8 | 5.1 | ⊚ | 3 | Example |
| 25 | 24.4 | 0.7 | 51.3 | 396 | 5.0 | 20.0 | 4.5 | 6.5 | ⊚ | 2 | Example |
| 26 | 24.6 | 7.4 | 50.9 | 200 | 5.0 | 4.9 | 3.0 | 1.0 | ⊚ | 2 | Example |
| 27 | 23.3 | 4.7 | 53.4 | 190 | 5.0 | 5.1 | 3.0 | 1.0 | ⊚ | 3 | Example |
| 28 | 24.7 | 3.9 | 50.7 | 200 | 5.0 | 20.0 | 3.0 | 1.0 | ⊚ | 4 | Example |
| 29 | 22.8 | 2.3 | 54.5 | 186 | 5.0 | 50.0 | 3.0 | 1.0 | ⊚ | 4 | Example |
| 30 | 23.4 | 0.1 | 53.2 | 191 | 5.0 | 95.0 | 3.0 | 1.0 | ⊚ | 4 | Example |
| 31 | 22.3 | 0.0 | 55.5 | 183 | 5.0 | 105.0 | 3.0 | 1.0 | ○ | 4 | Example |
| 32 | 23.3 | - | 53.4 | 190 | 5.0 | 150.0 | 3.0 | 1.0 | Δ | 4 | Example |
| 33 | 9.6 | 0.7 | 51.8 | 196 | 5.0 | 20.0 | 10.0 | 3.5 | ⊚ | 2 | Example |
| 34 | 13.7 | 0.7 | 54.3 | 187 | 5.0 | 20.0 | 5.2 | 2.5 | ⊚ | 3 | Example |
| 35 | 19.4 | 0.7 | 51.5 | 197 | 5.0 | 20.0 | 4.8 | 2.0 | ⊚ | 4 | Example |
| 36 | 27.3 | 0.7 | 50.4 | 202 | 5.0 | 20.0 | 3.0 | 1.5 | ⊚ | 4 | Example |
| 37 | 27.6 | 0.7 | 54.0 | 188 | 5.0 | 20.0 | 1.5 | 1.0 | ⊚ | 4 | Example |
| 38 | 34.2 | 0.7 | 51.2 | 198 | 5.0 | 20.0 | 0.2 | 0.4 | ○ | 4 | Example |
| 39 | 38.0 | 0.7 | 52.5 | 193 | 5.0 | 20.0 | 0.05 | 0.2 | Δ | 4 | Example |

| | | | | | | | | | | | |
|---|---|---|---|---|---|---|---|---|---|---|---|
| * The balance being Zn and inevitable impurity | | | | | | | | | | | |

## Claims

1. A hot pressed member comprising:
a steel sheet;
a coated or plated layer containing FeAl, Fe₂Al₅, and Zn distributed over at least one side of the steel sheet; and
a Zn-containing oxide layer distributed over the coated or plated layer, wherein
solute Zn content in the FeAl is less than 10 mass%.

2. The hot pressed member according to claim 1, wherein thickness of the Zn-containing oxide layer is 0.10 µm or more and 5.0 µm or less.

3. The hot pressed member according to claim 1 or 2, wherein an FeAl/Fe₂Al₅ ratio in the coated or plated layer is 5.0 or more and 100 or less.

4. The hot pressed member according to claim 1 or 2, wherein an area ratio of Zn in the coated or plated layer is 0.10 % or more and 5.0 % or less.

5. The hot pressed member according to claim 3, wherein an area ratio of Zn in the coated or plated layer is 0.10 % or more and 5.0 % or less.
